Europäisches Patentamt

European Patent Office

Office européen des brevets

(11) Publication number: **0 174 283**
**B1**

(12) **EUROPEAN PATENT SPECIFICATION**

(45) Date of publication of patent specification: **17.11.88**

(21) Application number: **85830200.3**

(22) Date of filing: **26.07.85**

(51) Int. Cl.⁴: **B 23 K 33/00,** A 47 G 19/22,
B 29 C 65/00

(54) **Method for making a goblet for water, wine, sparkling drinks or the like and the goblet made thereby.**

(30) Priority: **29.08.84 IT 2293284 u**

(43) Date of publication of application:
**12.03.86 Bulletin 86/11**

(45) Publication of the grant of the patent:
**17.11.88 Bulletin 88/46**

(84) Designated Contracting States:
**BE CH DE FR GB LI**

(56) References cited:
EP-A-0 105 858
EP-A-0 113 003
GB-A- 649 726
US-A-3 429 591

PLASTICA, vol. 18, no. 12, December 1965,
pages 586-590, Rotterdam, NL; C. SCHMIDT:
"Het lassen van kunststoffen door ultrasonore
energie"

(73) Proprietor: **FRATELLI PIAZZA S.a.s.**
**Via Privata Cairoli, 1**
**I-28023 Crusinallo (Novara) (IT)**

(72) Inventor: **Piazza, Ferdinando**
**Via Privata Cairoli, 1**
**I-28023 Crusinallo (Novara) (IT)**

(74) Representative: **Cicogna, Franco**
**Ufficio Internazionale Brevetti Dott.Prof. Franco**
**Cicogna Via Visconti di Modrone, 14/A**
**I-20122 Milano (IT)**

(56) References cited:
PLASTICS ENGINEERING, July 1976, pages
33-35, Greenwich, Conn., US; J. MENGASON:
"Vibration welding - a more versatile way to
join plastics"

Description

The present invention relates to a method for making a goblet for water, wine, sparkling drinks or the like.

In the production of metal goblets considerable difficulties are cureently encountered in making the connection between the cup or bowl and the column or stem, in that this connection is usually made by welding and then the welding zone requires subsequent surface finishing operations in order not to detract from the aesthetic appearance of the goblet so obtained. Such operations are very difficult, however, particularly when stainless steel is used, in that the welding operation itself usually creates localised chromatic variations in the metal which are not acceptable in a product of high quality. Another disadvantage, attributable to the manufacturing process used in the known art, is constituted by the fact that the welding techniques used involve making a weld with the addition of material which is fused to the workpieces, but with this technique it is difficult to be able to maintain the original form of the goblet entirely unchanged in that the weld metal added during welding creates thickness variations which can distort the original dimensions.

For example the US—A—3,429,591 patent teaches a method for making articles by a welding process wherein engaged ends of two parts are rotated in rubbing contact under pressure until the ends are worked to a plastic condition at which a weld can be formed by flashing some of the plastic material from the weld area. This method, however, would not be able of proper operating in welding a very reduced thickness metal bowl to a metal bowl stem.

The present invention seeks to eliminate the above noted disadvantages by providing a method for making metal goblet which makes it possible to obtain a connection between the stem and bowl without the need for added metal during welding and without having to undertake any delicate surface finishing operations after welding.

According to the present invention, there is provided a method for making a metal goblet for water, wine, sparkling drinks or the like according to the characterizing part of the mains claim.

A particular advantage of the invention is that a metal goblet can be made in which the junction between the stem and the bowl can be obtained with extreme dimensional precision without the welded connection of these two elements being visible.

Another advantage of the present invention is that it provides a metal goblet structure which, by its particular constructional characteristics, is able to give the widest guarantees of reliability, as well as being very simple to produce.

It is to be emphasised that the metal goblet structure of the present invention is suitable for all drinks such as water, wine, sparkling drinks or the like, and is easily obtainable starting from elements commonly available in commerce and, moreover, is competitive from a purely economic point of view.

One embodiment of the present invention will now be more particularly described, by way of example, with reference to the accompanying drawings, in which:

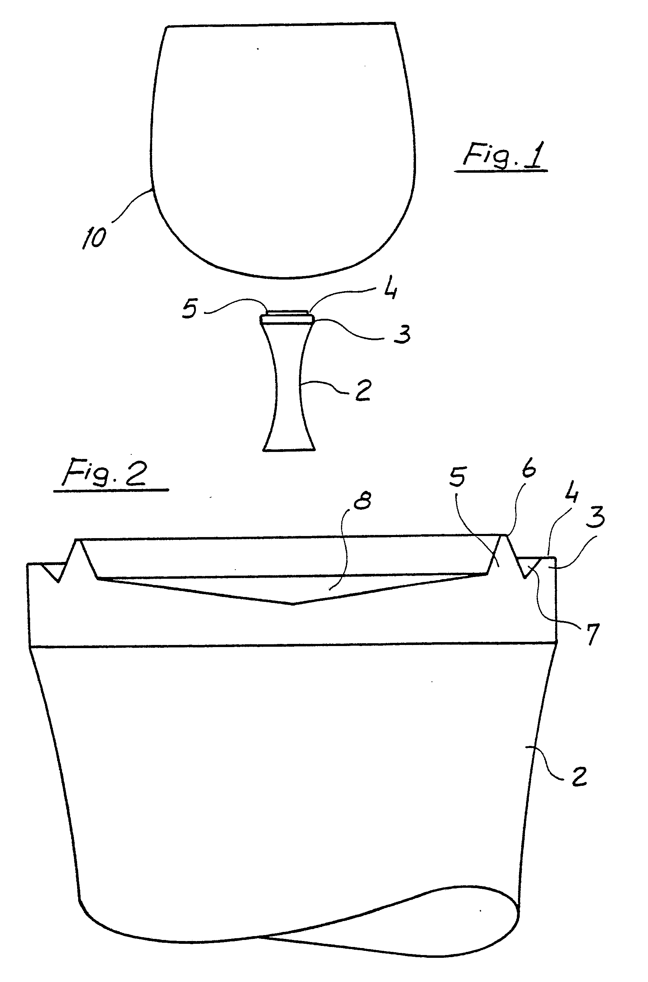

Figure 1 schematically represents a goblet formed as an embodiment of the present invention with its component elements shown separated before welding;

Figure 2 is an axial section on a greatly enlarged scale, showing the upper end of the stem; and

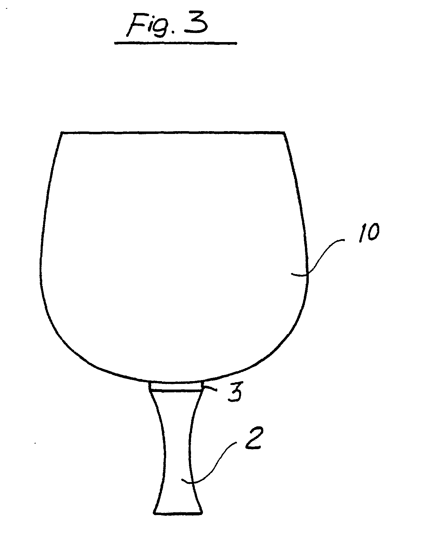

Figure 3 illustrates, in side view, the goblet obtained by the welded union of the component elements shown in Figures 1 and 2.

Referring now to the drawings, the metal goblet shown comprises a bowl 10 and a stem 2, which can have any conformation and dimensions considered suitable. At its upper end, the stem 2 has an outer circular abutment ring 3 terminating at the top with an annular face 4 which is substantially flat in a horizontal plane when the stem 2 is upright. Within the circular outer ring 3 there is provided a circular inner ring 5 which has an edge portion 6 tapering upwardly in such a way as to have, in transverse section, a substantialy triangular or saw tooth shape.

The circular inner ring 5 is separated from the circular outer ring 3 by an annular groove indicated with the reference numeral 7, and radially within the circular inner ring 5 there is a hollow cavity 8, or shallow recess preferably (as shown, but not necessarily) of substantially conical conformation.

The bowl 1 to be fitted to the stem 2 can have any shape and conformation considered suitable and is intended to be connected to the said stem at a median portion of its lower part.

The connection between bowl 10 and stem 2 is made by means of resistance welding by superimposing the stem 2 and the bowl 10 over one another such that, initially, the contact between the two is made solely by the tapered end 6 of the inner ring 5 at the end of the stem which projects with respect to the flat plane defined by the outer ring 3.

During the resistance welding process the projecting part of the inner ring 5 fuses and tends to penetrate at least partially into the contacting region of the bowl 10 where a concentration of the welding current takes place, which creates a localised fusion such as to allow both the partial penetration of the inner ring 5 into the bowl 10 and the fusion of the bowl 10 which continues until the two components approach one another sufficiently closely for the bowl 10 to come to rest against the flat face 4 of the outer ring 3. The two components are thus fused into a single piece by the welded union of the stem 2 and the bowl 10 without having to provide any added welding metal, and without the welding zone being visible from the outside in that the welding takes place predominantly in the zone of, and immediately surrounding, the inner ring 5 which, when the welding is completed remains obscured from view thanks to the presence of the outer ring 3 against which the cup rests.

By the process of the present invention a perfect union of the component elements is obtained in a rapid and certain manner thanks to the specific structural conformation of the upper connection end of the stem and, in particular, by the presence of the inner circular rings which, having a tapering cross section at its upper end, facilitates the localised fusion of material thus contributing to a secure welded union of the two elements.

Although the present invention has been described in particular in relation to stainless steel, any other metal, or even plastics, could be used, in which latter case, instead of electrical resistance welding, the welding could be effected by ultrasonics or by high speed friction achieved by relative angular oscillation of the two components.

## Claim

1. A method for welding a stem to a metal goblet bowl for water, wine, sparkling drinks or the like, comprising the steps of providing a metal bowl (10) to be resistance welded to the upper end of a stem (2), forming at the upper end of said stem (2) an outer annular abutment portion (3) and an inner contact portion (5) spaced radially inwardly of the outer abutment portion (3) and projecting axially therefrom, said outer annular abutment portion (3) having a substantially circular face (4), characterized in that it further comprises the steps of forming said inner contact portion (5) with a substantially trapezoidal shape, in transverse section, forming an annular groove (7) between said outer abutment portion (3) and said inner contact portion (5), and forming said upper end of said stem with a cavity radially inwardly of said inner contact portion (5), positioning said stem with said contact portion in contact with the lower part of said goblet bowl with said stem and bowl in the desired relative position to form the goblet, and locally resistance heating said annular contact region between said bowl and said contact to make whereby a fused connection between this portion and said bowl which, upon completion is obscured by said radially outer abutment portion.

## Patentanspruch

1. Verfahren zum Schweissen eines Schaftes an einem Metallkelch für Wasser, Wein, Schaumgetränke oder dergleichen, einschliessend die Widerstandsschweissung eines Metallkelches (10) auf die obere ende eines Schaftes (2), die Verformung, auf die obere Ende des obengenannten Schaftes (2), eines ringförmigen Aussenstützteiles (3) und eines Innenberührungsteiles (5), die innenwärts dem Aussenstützteil (3) und radial von diesem springend, radial entfernt ist, wobei der obengenannte ringförmige Aussenstützteil (3) eine wesentlich kreisförmige Fläche (4) besitzt, dadurch gekennzeichnet, dass dies, ausserdem, die Verformung des obengenannten Innenberührungsteiles (5) mit einem wesentlich trapezförmgen Querschnitt, die Verformung einer Rille (7) zwischen dem obengenannten Aussenstützteil (3) und dem obengenannten Innenberührungsteil (5), und die Verformung der oberen Ende des obengenannten Schaftes mit einer Anhöhlung radial innenwärts dem Innenberührungsteil (5), die Anordnung des obengenannten Schaftes, wobei der obengenannte Berührungsteil mit dem unteren Teil des obengenannten Kelches in Berührung ist und wobei die obengenannte Schaft und Kelch, um so den Kelch zu bilden, die gewünschte relative Stellung erreichen, und die Widerstandsheizung des ringförmigen Berührungsbereich zwischen dem obengenannten Kelch und dem obengenannten Berührungsteil, um so eine Schmelzkupplung zu schaffen zwischen dem obengenannten Kelch und diesem Teil, der, als die Arbeitsstufe beendet ist, von dem obengenannten radialen Aussenberührungsteil bedeckt bleibt.

## Revendication

1. Méthode pour souder une queue à un godet métallique pour eau, vin, moussants et similaires, comprenant les phases de souder à résistance un godet métallique (10) à l'extrémité supérieure d'une queue (2), de former à l'extrémité supérieure de ladite queue (2) une portion (3) d'appui annulaire extérieure et une portion (5) de contact intérieure, écartée radialment vers l'intérieur de la portion d'appui (3) annulaire extérieure, ladite portion d'appui (3) présentant une face essentiellement circulaire, charactérisée en ce qu'elle comprend en outre la phase de donner à ladite portion de contact (5) intérieure, une forme essentiellement trapézoïdale en coupe transversale, de former une rainure (7) entre ladite portion d'appui (3) extèrieure et ladite portion de contact (5) intérieure, et de former ladite extrémité supérieure de ladite queue avec un évidage radial vers l'intérieur de ladite portion de contact (5) intérieure, de positionner ladite queue avec ladite portion de contact en contact avec la région inférieure dudit godet, où lesdits queue et godet se trouvent dans leur position relative désirée, pour former le calice, et de chauffer à résistance ladite région de contact annulaire entre ledit godet et ladite portion de contact, pour former une jonction par fusion entre ledit godet et cette portion qui, à opération terminée, reste couverte par ladite portion d'appui radialement extérieure.

Fig. 1

Fig. 2

## Fig. 3